# EUROPEAN PATENT APPLICATION

(11) **EP 1 170 958 A1**
(43) Date of publication of application: **09.01.2002**
(21) Application number: 00305486.3
(22) Date of filing: 29.06.2000
(51) Int. Cl.: H04N 9/28

(54) **Projection apparatus and method of image projection**

(71) Applicant: Sony Espana SA, 08028 Barcelona (ES)
(72) Inventor: Mendez, Villamide Jesus, Barcelona (ES)
(74) Representative: DeVile, Jonathan Mark, Dr.

(57) **Abstract**

A projection apparatus generates an image (1) by projecting light representative of the image on to a display screen (10). The apparatus comprises at least one projector (20, 22, 24) operable to receive at least one component signal (I_{R}, I_{B}, I_{G}), representative of a component of the image and to project light representative of the component on to the display screen (10), the projector having an adjustment means for adjusting the relative position of the projected image component on the display screen, a convergence processor (120) coupled to the adjustment means and operable to adjust a relative position of the image (1) component on the display screen (10) in response to a measurement signal generated by a sensor (100, 200, 210) in response to light received from the projector (20, 22, 24), wherein the convergence processor (120) is operable in combination with the projector (20, 22, 24) to project a test projection (150, 160, 220, 230, 240, 250, 260) on to the screen, the sensor (100, 200, 210) generating the measurement signal in response to the test projection, and to position the test projection, in a first phase, in a first plurality of predetermined positions substantially aligned in a first direction on the screen, to determine a first displacement measure in the first direction from the response of the sensor to the test projection at the first predetermined displacements, to position the test projection in a second phase in a second plurality of predetermined positions substantially aligned in a second direction on the screen, to determine a second displacement measure in the second direction from the response of the sensor to the test projection at the second predetermined displacements, and to adjust the position of the image on the screen in accordance with the first and second displacement measures. The shape of the test projection may be different in the first and the second phases. The projection apparatus may be a projection television having a plurality of projectors for each of a plurality of image components. The convergence processor is arranged to align the projected image components using a response from a single sensor.

## Description

### Field of the Invention

The present invention relates to projection apparatus which are arranged to generate images by projecting light representative of the images onto a display screen. The present invention also relates to methods of projecting images on to a screen.

### Description of the Prior Art

Known apparatus for generating visual images include the Cathode Ray Tube (CRT) in which a signal representing an image is arranged to modulate beams of electrons within a vacuum tube. The electrons are arranged to strike a phosphor lined wall of the tube which is divided into individual pixels. The pixels contain different phosphor elements which emit light of different colours when hit by the electrons. The modulation of the electron beams thereby creates a coloured image from the different coloured pixels elements. Other apparatus include Liquid Crystal Displays in which the optical properties of pixels which make up the displays are changed in accordance with signals representative of pixels of the image to be displayed.

Although it is possible to manufacturer CRT displays to a relatively large size, if a display is required to produce a picture to be viewed by a large audience, the manufacture of CRT displays and LCD displays becomes difficult. For displays which are required for large audiences it know to use a projection apparatus, such as, for example a projection television.

Projection televisions are typically arranged to generate an image from a signal representing the image using, for example, a smaller CRT. Light generated by the CRT is projected on to the screen. Projection televisions are known to include front and rear projection arrangements. Generally, but not exclusively, the front projection televisions are arranged to project the image on to a separate screen, whereas for rear projection televisions, the image is projected from behind a viewing side of the screen (referred to herein as a projection side) which forms an integral part of the television.

As with CRT displays, projection television displays are arranged to form colour images by projecting three different components of the image representative of red, green and blue components of the image on to a screen. However, in order to provide an acceptable representation of the colour image, the three components must be projected onto to the screen with the effect that the three components are superimposed whereby the components converge with each other. This superposition is achieved by providing some arrangement whereby the image components are aligned at a plane in which the display screen is disposed. If the three components are not aligned then the coloured image suffers from reduced definition, which is disturbing for the viewer. Arranging for the three components of the colour image to convergence is exacerbated in projection television, because typically each component of the image is generated with a separate CRT. Furthermore, an optical arrangement for projecting the image components onto the screen, particular for rear projection televisions, can require that at least one and usually two of the red, green and blue projectors are offset at an angle.

Generally in order to provide an arrangement in which the colour components of the image are arranged to converge, projectors of each of the three components are provided with an adjustment means. For the example of projectors which utilise a CRT to generate the colour component of the image, the CRT is provided with a deflection coil or choke, for each of the horizontal and vertical directions, which are arranged to change a position of the projected image on the screen in dependence upon horizontal and vertical biasing adjustment voltages applied to the deflection coil. However, although the adjustment voltages can be pre-set by the manufacturer in the factory so that the three colour components of the image are aligned, influences on the magnetic field of the CRT, temperature and ageing effects generally cause the colour components to again diverge. To this end, it is known to provide projection televisions with a convergence arrangement whereby the three colour components are again arranged to converge.

One such convergence arrangement provides a plurality of sensors which are disposed on the display screen. This arrangement is disclosed in European Patent serial number EP 0 852 447 A. Each of the sensors is exposed to a test projection from each of the projectors. The test projections are projected at a plurality of predetermined positions either side of the sensors and measurement signals detected by the sensors for each of the predetermined positions are integrated to provide an average measurement signal. The displacement of the test projections is controlled to the effect of locating a relative displacement of the test projections which provides a maximum value of the average measurement signal. In this known arrangement, the sensors are photodiodes. In other previously proposed arrangements, the sensors are photo-voltaic (sollar) cells. The solar-cells are used because the latency in the measurement signal in response to the test projection produced from the photo-voltaic cells is conveniently matched to a typical rate of processing of a microprocessor. The alignment process is therefore conveniently performed by the microprocessor.

The convergence arrangement in known systems requires the user to manually trigger the adjustment process during which the test projections are visible on the screen, and the projected image is not displayed. This is a cause of some inconvenience and disturbance to viewers.

### Summary of the Invention

According to the present invention there is provided a projection apparatus for generating an image, by projecting light representative of the image on to a display screen, the apparatus comprising at least one projector operable to receive at least one component signal, representative of a component of the image and to project light representative of the component on to the display screen, the projector having an adjustment means for adjusting the relative position of the projected image component on the display screen, a convergence processor coupled to the adjustment means and operable to adjust a relative position of the image component on the display screen in response to a measurement signal generated in response to light received from the projector, wherein the convergence processor is operable in combination with the projector to project a test projection on to the screen, the sensor generating the measurement signal in response to the test projection, and to position the test projection, in a first phase, in a first plurality of predetermined positions substantially aligned in a first direction on the screen, to determine a first displacement measure in the first direction from the response of the sensor to the test projection at the first predetermined displacements, to position the test projection in a second phase in a second plurality of predetermined positions substantially aligned in a second direction on the screen, to determine a second displacement measure in the second direction from the response of the sensor to the test projection at the second predetermined displacements, and to adjust the position of the image on the screen in accordance with the first and second displacement measures.

Embodiments of the present invention provide a convergence processor which is arranged to detect an alignment position of the projected image using the output from only a single sensor. In comparison, prior art convergence arrangements require at least two and usually four sensors in order to effect adjustment of the vertical and horizontal adjustment signals. The sensors in prior art arrangements are generally disposed on respective horizontal and vertical axes, and illuminated by separate test projections, at a plurality of controlled sample positions which are generally aligned in the vertical or horizontal directions. The controlled sample positions aligned in the vertical direction are used to determine the vertical displacement required for vertical alignment and the sample positions aligned in the horizontal direction used to determine the horizontal displacement for alignment.

Embodiments of the present invention are arranged to utilise a single sensor by providing a convergence processor which operates in combination with the projectors to project a test projection, which is arranged in a first phase to illuminate the sensor at a first plurality of controlled sample positions, which are generally aligned in a first predetermined direction with respect to the projected image. In the second phase the test projection is arranged to illuminate the sensor at a second plurality of predetermined sample positions with respect to the reference position. For the first phase, the measurement signal produced by the sensor in response to the test projection is used to determine a relative displacement of the projected image for alignment in the first direction, and in the second phase the measurement signal is used to determine a relative displacement of the projected image for alignment in the second direction.

The present invention recognises the improved control of positioning the test projection and the use of a sensor having a narrow detection area, and/or a narrow bandwidth of a sensor which is used to detect the test projection. In preferred embodiments the sensor is a photo diode, photo transistor or the like.

To facilitate detection of an alignment position by the sensor in the first and the second phase, preferably, the test projection has a first shape in the first phase, and a second shape in second phase. The first shape may have a greater size in a direction perpendicular to the first predetermined direction than in a direction substantially co-linear with the first predetermined direction. For example, the first shape may be an oblong, or rectangle having two parallel sides which are longer than the two remaining sides perpendicular to the parallel sides.

Advantageously, the second plurality of predetermined positions aligned in the second direction is arranged to be at a displacement corresponding to the first displacement measure from the predetermined reference in the first predetermined direction. As a result the detection of the test projection in the second phase is made more easily because the second plurality of sample positions are more likely to pass over the sensor, because the test projection has been aligned in the first direction.

In preferred embodiments the second shape may have a shape substantially the same as the shape of the sensor. In one embodiment the shape of the test projection in the second phase is a circle, dot or the like. As explained, because in the second phase the second plurality of predetermined positions are aligned in the first direction, a more accurate detection of the test projector of the sensor may be made, and to this end the test projection is matched to the shape of the sensor.

Although the first and second predetermined directions may be selected as any directions within the projected image, preferably to improve the convergence of the test projection on the sensor, the first and second predetermined directions are perpendicular to each other. Again, although the perpendicular directions may be any convenient directions, preferably one of the first and second predetermined directions may be a horizontal direction of a viewed image on the screen, and the other of the first and second predetermined directions may be a vertical direction of the viewed image on the screen.

In a preferred embodiment, the projection apparatus may comprise a second sensor disposed on said screen with respect to the first of said sensors, and a comparator operatively coupled to said first and second sensors, said first and second sensors are aligned in a predetermined direction. The predetermined direction of alignment may diagonal direction with respect to the first and the second directions on the screen. By arranging the first and second sensors diagonally, the comparator will be arranged to provide a null output when the test projection is positioned equally over the first and second sensors and only when the test projection is correctly aligned in both the first and second directions on the screen.

According to an aspect of the present invention there is provided a television apparatus having a receiver for detecting a television signal and for recovering from the television signal an image signal representative of an image, and the projection apparatus for generating the image from the image signal.

According to another aspect of the present invention there is provided a convergence processor for use in a projection apparatus as claimed in any preceding Claim, the convergence processor being operable to generate an adjustment signal for an adjustment means of each of a plurality of projectors, for changing the relative position of an image component projected by each projector, in accordance with a measurement signal received by the convergence processor from a sensor in response to a test projection produced by the projectors with the image components, to position the test projection, in a first phase, in a first plurality of predetermined positions substantially aligned in a first direction on the screen, to determine a first displacement measure in the first direction from the response of the sensor to the test projection at the first predetermined displacements, to position the test projection in a second phase in a second plurality of predetermined positions substantially aligned in a second direction on the screen, to determine a second displacement measure in the second direction from the response of the sensor to the test projection at the second predetermined displacements, and to adjust the position of the image on the screen in accordance with the first and second displacement measures. In preferred embodiments the convergence processor is implemented as an integrated circuit.

According to another aspect of the present invention there is provided a method of generating an image having at least one image component, by projecting light representative of the image on to a display screen, the method comprising the steps of projecting test projection on the screen, sensing a relative position of the test projection, positioning the test projection, in a first phase, in a first plurality of predetermined positions substantially aligned in a first direction on the screen, determining a first displacement measure in the first direction from the response of the sensor to the test projection at the first predetermined displacements, positioning the test projection in a second phase in a second plurality of predetermined positions substantially aligned in a second direction on the screen, determining a second displacement measure in the second direction from the response of the sensor to the test projection at the second predetermined displacements, and adjusting the position of the image on the screen in accordance with the first and second displacement measures.

### Brief Description of the Drawings

The present invention will be described further, by way of example only, with reference to a preferred embodiment thereof as illustrated in the accompanying drawings, in which:
Figure 1A provides an illustrative block diagram of a projection television apparatus,
Figure 1B provides an illustrative block diagram of the projection television of figure 1A, configured as a rear projection arrangement,
Figure 2A is a schematic block diagram of a previously proposed projection processor,
Figure 2B is a schematic block diagram showing four sensors disposed on a display screen which forms part of a projection television configured for use with the projection processor of figure 2A,
Figures 3A, 3B, 3C and 3D, provide an illustration of a test projection displayed with respect to the sensors of the display screen shown in figure 2B,
Figure 3E is a graphical representation showing a relationship between the magnitude of a measurement signal from the sensors with respect to a position of the test projection,
Figure 4 is a schematic block diagram of a projection processor according to embodiments of the present invention,
Figure 5 is a schematic block diagram of a display screen according to embodiments of the present invention,
Figures 6A, 6B and 6C provide a representation of a first test projection displayed with respect to the sensor of the display screen shown in figure 5, illustrating a first phase of an alignment process according to a first embodiment of the present invention,
Figures 6D, 6E and 6F provide a representation of a second test projection displayed with respect to the sensor of the display screen shown in figure 5, illustrating a second phase of the alignment process of the first embodiment,
Figures 7A and 7B provide a representation of a first test projection displayed with respect to two sensors of a sensing device, illustrating a first phase of an alignment process according to a second embodiment of the present invention,
Figure 7C is a graphical representation showing a relationship between the magnitude of a measurement signal from the sensing device with respect to a position of the test projection,
Figures 7D and 7E provide a representation of a second test projection displayed with respect to the two sensors, illustrating a second phase of the alignment process of the second embodiment,
Figures 8A to 8D provide a schematic representation of an alternative arrangement of the first and second test projections, according to the first and second phases of the second embodiment,
Figures 9A, 9B and 9E show a representation of two sensors forming a sensing device and a test projection according to a third embodiment of the present invention,
Figures 9C and 9D provide a graphical representation showing a relationship between the magnitude of a first and second output signals forming the measurement signal from the sensors with respect to a position of the test projection, according to the third embodiment, and
Figure 10 provides a schematic block diagram of a display screen and the two sensors according to an alternative arrangement of the third embodiment.

### Description of a Preferred Embodiment

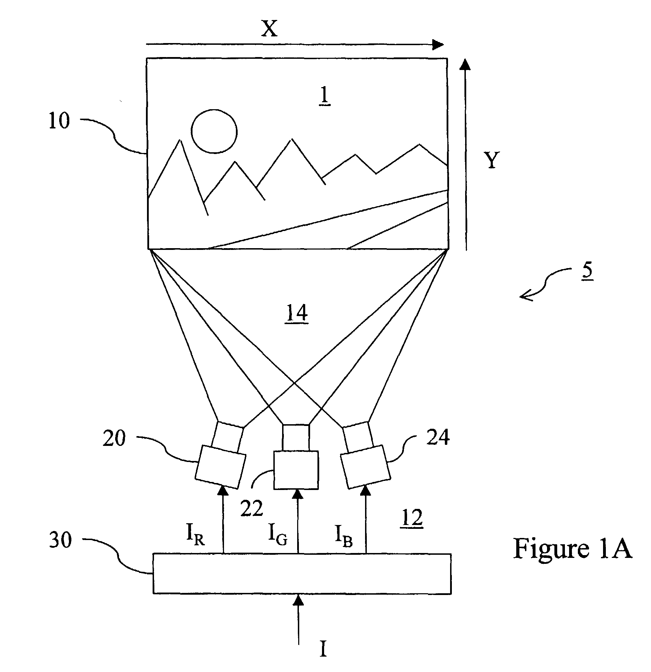

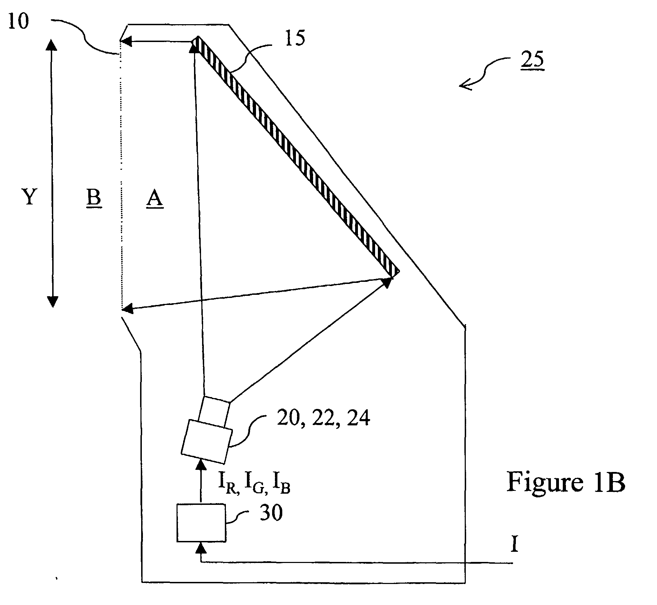

Embodiments of the present invention find application with any form of projection apparatus, including front and rear projection arrangements. However an illustrative example embodiment of the present invention will be described with' reference to a rear projection arrangement, and more particularly to projection televisions. A rear protection television is illustrated schematically in figures 1A and 1B.

In figure 1A a projection apparatus, generally 5, is arranged to project an image 1 onto a display screen 10 which extends in a horizontal X and vertical Y direction. The projection apparatus 5 has three projectors 20, 22, 24 and a projection processor 30. The projection processor 30 is connected to the projectors 20, 22, 24 by parallel connectors 12. An image signal I, which represents the image 1 which is to be projected onto the display screen 10, is received by the projection processor 30 and separated into three component signals I_{R}, I_{B}, I_{G}, which are representative of red, green and blue components of the image. Each projector 20, 22, 20 receives a respective component signal I_{R}, I_{B}, I_{G}, from the conductors 12 and generates an image component corresponding to the component signal. The three projectors 20, 22, 24 are thereby arranged such that the red, green and blue components of the colour image 1 are superimposed on the display screen 10 to form the colour image 1.

Although the example embodiment has three projectors generating red, green and blue components, it will be appreciated that in other embodiments, a projection apparatus according to an embodiment of the invention may have two or only one projector, which is arranged to project an image of any wavelength both visible and invisible to the human eye. However, the present invention finds particular utility with projections apparatus having two or more projectors which are arranged to generate image components having different colours in which the light from each of the projectors has at least one different wavelength. In other embodiments the projectors may project components having the same colour.

Figure 1B shows a particular embodiment of a projection apparatus 25.which is configured as a rear-projection apparatus. In the following description, the region A on which image components from the projectors 20, 22, 24 are projected on to the display screen 10 will be referred to as the projection side of the display screen 10, and the region B on the side of the display screen 10 from which the image is viewed will be referred to as the viewing side. Each projector 20, 30, 40 is arranged to project its respective image component via an optical arrangement, which includes a mirror 15, to form the image on the projection side. The image is reflected by the mirror 15 onto the display screen 10 so that the image may be viewed by a viewer from the viewing side.

In the example embodiments shown in figures 1A and 1B, the projectors 20, 22, 24 are formed from smaller CRTs which generate the light forming the red, green and blue projected image components. The image component generated by each of the projectors 20, 22, 24 must be aligned in some way so that the superposition of the image components provides a colour image with good definition. Arranging for the three components of the colour image to converge is made more difficult for projection televisions, because typically each component of the image is generated with a separated CRT. Furthermore, the optical arrangement of the projectors 20, 22, 24 can require that two of the red, green and blue colour image components (typically red and blue) are offset at an angle, particularly where the three projectors are arranged in line. It is generally therefore necessary to adjust the relative position on the screen of each of the three components, in the factory during a final production phase, to the effect that the image components are aligned. To this end, the projectors 20, 22, 24 are usually provided with an adjustment means whereby the relative position of the projected image on the screen can be adjusted. For an example implementation in which the projectors include CRTs, the adjustment means is formed from a deflection coil or choke (DCh, DCv) for each of the horizontal (X) and vertical (Y) directions to which an adjustment signal is applied. The adjustment signal may be any predetermined signal, however in the present illustrative embodiment, the adjustment signal is a voltage for the vertical (Vy) and the horizontal (Vx) deflection coils (DCh, DCv).

During the factory setting, the red, green and blue image components are aligned to achieve a desired picture definition. An alignment is performed typically whilst the projector television is within a constant magnetic field. An alignment process is performed in which an operator visually changes the adjustment signal components (Vx, Vy) applied to the horizontal and vertical deflection coils, for each of the three image components until the three components are aligned. The adjustment values for the horizontal and vertical directions may be applied using potentiometers, but more typically are stored in a memory as a digital value and applied via D/A converters to the deflection coils of the respective projectors 20, 22, 24. The value of the adjustment signals which are stored in memory are known as factory settings or correction values.

Although the image components are arranged to converge using the correction values set during the alignment process performed in the factory, the effects of stray magnetic fields, temperature changes and ageing effects can cause the three image components to once again diverge. As such it is known to provide projection televisions with an arrangement for automatically performing the alignment process, when manually triggered by the user. However, as will be explained shortly, known arrangements for automatically performing the alignment suffer several disadvantages, one of which is that the user must manually trigger the alignment process. A.further disadvantage is that whilst the alignment process is being performed the projected image cannot be displayed.

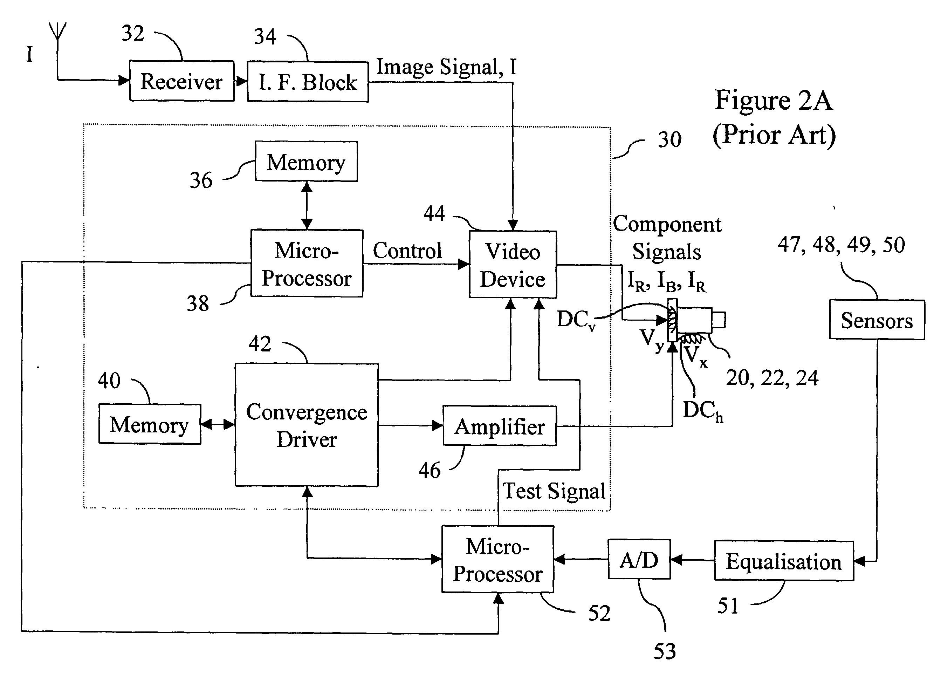

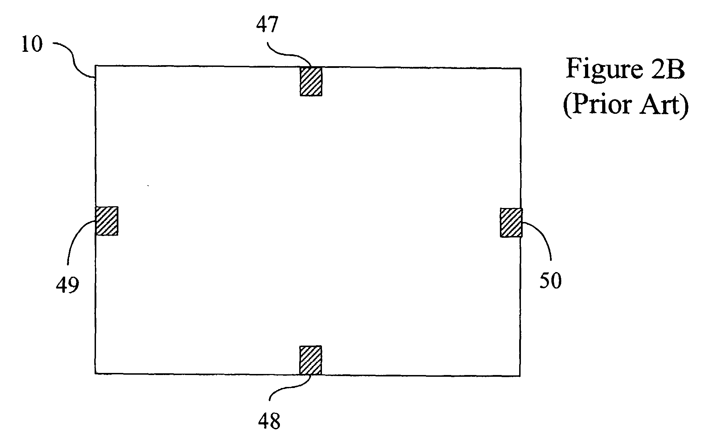

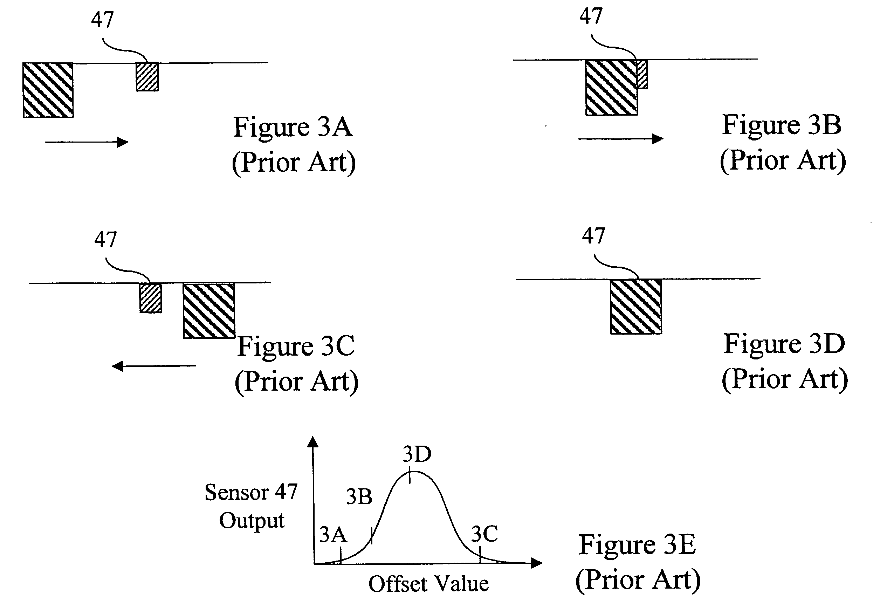

In order to better appreciate the many advantages provided by embodiments of the present invention, a previously proposed alignment process and arrangement will be briefly described in the following paragraphs with reference to figure 2 and 3, where parts also appearing in figures 1A and 1B have the same numerical references. For comparison an example of a known arrangement is provided in the above-mentioned European patent serial number EP 0 852 447 A.

In Figure 2A, the projection processor 30 receives the image signal I, from a television receiver 32. The receiver 32 is arranged to recover the image signal I, from a television signal received from an antenna 34. The image signal I is fed to a video device 44 which separates the image signal into the component signals I_{R}, I_{B}, I_{G} which are applied to the three respective projectors 20, 22, 24. The projection processor has a system controller 38 formed from a microprocessor, which generally controls the projection apparatus 25, with the system controller 38 operating as a master and all other units configured as slave units. The system controller 38 has an associated memory 36 for storing program instructions and data.

The projection processor 30 also comprises convergence driver 42 for controlling the spatial alignment of image components, in combination with a convergence processor 52. The convergence driver 42 has an associated memory 40 for storing the correction values (factory settings) as described above.

However, to allow for automatic adjustment of the components, the previously proposed projection apparatus 25 utilises generally four sensors 47, 48, 49, 50. The sensors 47, 48, 49, 50 are typically photocells and are arranged at the periphery of the screen 10 as illustrated in Figure 2B. The height and width of the photocells typically spans several pixels, so that for example, the height of the photocell has a dimension in the X and Y direction equivalent to 10 lines of the projected image. The alignment process according to the previously proposed arrangement will now be explained with reference to figure 3, where parts also appearing in figures 1A, 1B, 2A and 2B have the same numerical references.

Following a manually press of a reset switch (not shown) by the user, the system controller 38 instructs the convergence processor 52 implemented as a second microprocessor 52 to enter an automatic alignment process. As shown in Figures 3A to 3E, during the automatic alignment process the image signal is isolated by the video device 44, such that only a test signal representative of a test projection is applied to the projectors 20, 22, 24. Hence whilst the test projection is being projected the projected television image cannot be seen. As shown in figures 3A, 3B, 3C and 3D, the test projection comprises a substantially rectangular image 46 which is projected at a number of predetermined locations. Typically, the area of the image is large with respect to the sensors 47, 48, 49, 50. As such, although the sensors 47, 48, 49, 50 are mounted in a blanking region (not shown) formed in an over scan area on the projection side of the screen 10, the test projection 46 can be seen during the automatic alignment process from the viewing side. The test projection is typically arranged, in known manner, to traverse towards the sensors 47, 48, 49, 50, providing at each of the predetermined positions a measurement signal from the sensors.

The measurement signal from the sensors 47, 48, 49, 50 is received by the convergence processor 52 via an equaliser 51 and an A/D converter 53. The equaliser 51 applies a filter to the output from the sensors 47, 48, 49, 50 in dependence on the wavelength of the light produced by the projector to compensate for the non-linear frequency response of the sensors 47, 48, 49, 50.

After a first pass over the sensors 47, 48, 49, 50, the position at which the test projection is projected onto the sensor is adjusted by the convergence processor and the measurements repeated, as illustrated in Figures 3A, 3B and 3C.

The convergence driver 42, under the control of the convergence processor 52 continues this process for sensors 47 and 48, traversing from both directions as indicated in Figures 3A to 3D until the location of all the peak outputs have been stored. Thereafter, the convergence processor 52 calculates an arithmetic mean of these stored values to derive a horizontal offset value.

The sensors 49, 50 are used to generate vertical offset values in a similar manner. This process continues until horizontal and vertical offset values have been calculated for the plurality of image components which are stored in memory. The convergence processor 52 is arranged to receive the correction values determined during the factory alignment and the offset values generated during alignment process. The convergence processor 52 then generates an adjustment signal for each image component which provides for improved alignment of the image components. The alignment signals are applied to the projectors 20, 22, 24 via the amplifier 46 to the deflection coils DCh, DCv, (adjustment means) of the respective projectors 20, 22, 24. The alignment process is then terminated and the projected image according to the television signal again displayed.

In addition to the disadvantage that the known arrangement must be manually triggered by the user, and the disadvantage that the projected image cannot be displayed during the alignment process, the projection processor shown in figure 2A is expensive to manufacture because it requires two microprocessors for implementing the system processor 38 and the convergence processor 52. This is because the sensors 47, 48, 4, 50 are generally large, being photo cells, which produce a measurement signal having a considerable lag with respect to the time at which the test projection is received by the sensor. Furthermore, because of the limited accuracy with which the test projection can be controlled, the test projection is relatively large, so as to ensure that the test projection is received by the sensors. Also, the output of the sensor is ambiguous, in that the same output value will be produced by the sensor whether the test projection is to the left or to the right (in the horizontal direction) of the sensor. For these reasons several passes of the sensor must be made by the test projection, and the resulting value of the measurement signal integrated in order to obtain a satisfactory indication of an optimum alignment position corresponding to the peak value of the measurement signal. This in turn requires the use of a microprocessor to implement the convergence processor 52. The previously proposed alignment process and convergence processor is therefore expensive and furthermore requires at least four sensors in order to correctly align the image components.

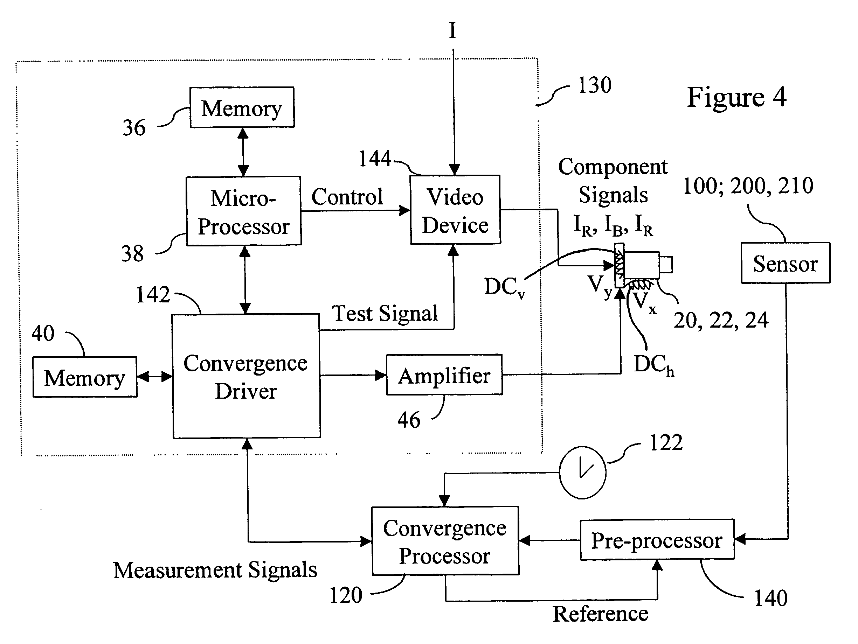

A first embodiment of the present invention is shown in figure 4, where parts also appearing in figures 1, 2 and 3 bear the same designated references. In figure 4 a projection processor according to an embodiment of the present invention corresponds substantially to the previously proposed projection processor shown in figure 2A, and so only the differences will be described. In figure 4, the microprocessor 58 which forms the convergence processor 52 has been replaced by a hardware implemented convergence processor 120. Furthermore the convergence driver 42 has been replaced with an enhanced convergence driver 142, for which there is no connection to the video device 44. Instead, a test signal is provided from the convergence driver 142. The projection processor 130 is also provided with a pre-processor 140 connected to the sensor 100, 200, 210, and a timer 122.

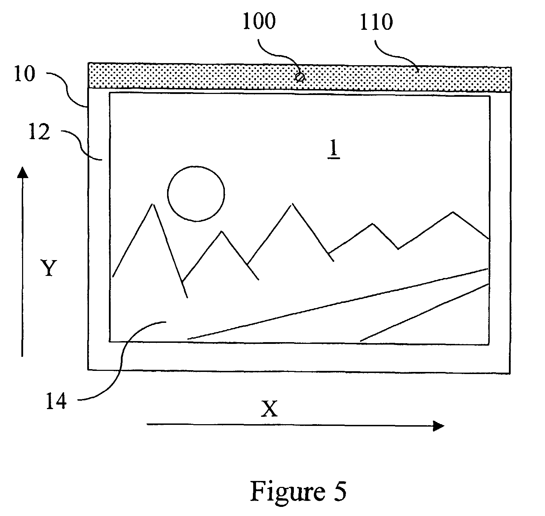

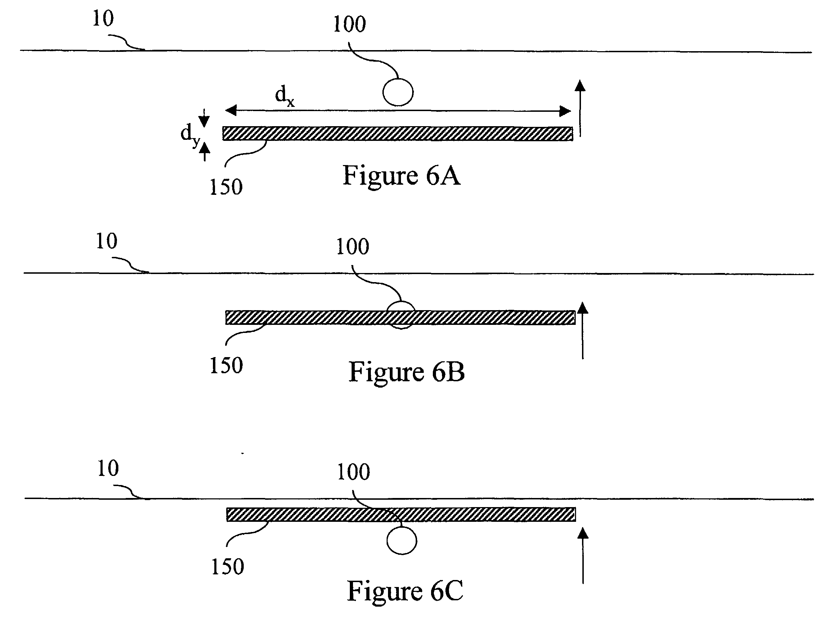

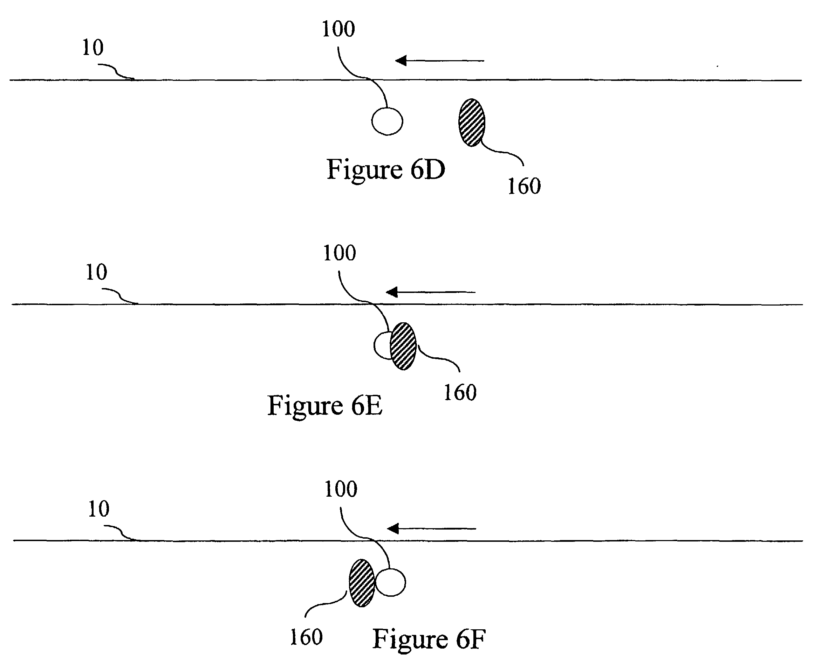

An alignment process performed by the convergence processor 120 shown in figure 4 according to a first embodiment of the present invention will now be explained with reference to figures 5 and 6 where parts also appearing in figures 1 to 4 have the same designated references.

The first embodiment shown in figures 5 and 6 illustrates an alignment process performed by a convergence processor 120 using only a single sensor, whilst contemporaneously projecting the image I representing the image signal onto the display screen 10. As such, two of the disadvantages associated with the previously proposed alignment process are overcome or at least improved, because the projected image according to the television signal can be displayed contemporaneously with the test projection and hence alignment of the image components is performed whilst the television image is being projected. In addition, there is no longer a requirement for the user to manually trigger the alignment process, because this can be performed periodically whilst the picture is being displayed. The alignment process can be automatically triggered after a predetermined alignment period has passed since the last alignment, which in the example embodiment of figure 4 is measured using the timer 122. Yet further, the alignment process is simplified and the sensor arrangement made less expensive, because only a single sensor is required. For this reason the convergence processor can be implemented in hardware.

The embodiment illustrated in Figure 5 utilises one sensor 100. The sensor 100 is disposed on the projection side in a blanking region formed around a periphery of the screen 10.

As already explained, typically television images are displayed on a screen of some kind on a side obverse to the viewing side. The images are generally projected to fill the display screen 10. However, the display screen typically includes an over-scan area or a so-called beznet 12 which is opaque and therefore obscures a part of the image projected in this area from the viewing side. The remainder of the image may be viewed in a visible picture area 14. Typically, the area of the beznet 12 represents around 7% of the area of the display screen 10. It is well know to provide the beznet 12 in order to prevent the user from viewing any blanking regions formed in the scanned image which may become visible as a result of image drift.

In this embodiment, the sensor 100 is disposed on the beznet 12. Preferably, but not exclusively, the sensor 100 is disposed centrally within the upper horizontal region of the beznet 12. However, it will be appreciated that the sensor may be positioned at any suitable point within the beznet 12.

According to the present embodiment the sensor 100 is a photodiode or phototransistor which generates a photovoltaic response at each of the wavelengths of the components I_{R}, I_{G}, I_{B}. Photodiodes are one example of a group of sensors having a narrow field of view, such that only light which is in close proximity to the sensor 100 will result in an output measurement signal being generated. Furthermore, preferably the sensor 100 has a sufficient response time to ensure that the rise and decay of the output signal has a minimal lag with respect to the incident light and that the output signal is proportional to the flux levels of the incident light.

Figures 6A to 6F illustrate an alignment process according to the first embodiment. The alignment process can generally be considered as comprising two phases. In a first phase, a vertical offset to the vertical component of the adjustment signal Vy is determined, and in the second phase the horizontal offset to the horizontal component of the adjustment signal Vx is determined. The vertical and horizontal offsets for each image component have an effect of once again aligning the image components.

A test signal is generated, by the convergence driver 142 in a systematic way for each of the three image components. The alignment for each component is effected separately in the same way, and so the alignment of one image component only will be explained. The test signal is received by the video device 144 and combined with the image signal I. The test signal represents a test projection 170. The test projection 170 is displayed on the screen contemporaneously with the projected image 1.

For determining the vertical offset to the vertical component Vy adjustment signal, the test projection 170 preferably has a small dimension in the vertical Y direction and a large dimension in the horizontal X direction. The test projection 170 has a small dimension in the vertical Y direction so that light will only be incident on the sensor 100 when the test projection 170 is in close proximity to the sensor 100. As a result the vertical adjustment signal Vy can be determined by simply detecting a peak output from the measurement signal produced by the sensor 100.

The test projection 170 has a large dimension in the horizontal X direction so that the test projection 170 will be more likely to intersect the sensor 100 even though there may be alignment errors in the horizontal X direction.

In the first phase of the alignment process, the test projection 170 is arranged to be projected at a first predetermined position in close proximity, but vertically to one side of the sensor 100. In preferred embodiments, the first predetermined position is derived from the vertical correction value of the factory setting of the vertical adjustment signal, which is store in memory 40. The convergence processor 120 in combination with the convergence driver 142 adds an offset to the vertical correction value of the adjustment signal Vy applied to the deflection coil, to position the test projection 170 at the first predetermined position. The vertical offset has a value such that although the image has become misaligned vertically, based on worst-case conditions, the vertical offset value ensures that the test projection 170 is projected to the required side of the sensor 100 as illustrated in Figure 6A.

Thereafter, given that the vertical location of the test projection 170 in relation to the sensor 100, the vertical offset value is adjusted such that the test projection 170 is projected closer to the sensor 100, here in the direction Y as illustrated in Figure 6B and the output of the sensor 100 may then be measured again. This adjustment process continues until the test projection 170 has passed over the sensor 100 and the measurement signal from the sensor begins to reduce as illustrated in Figure 6C. The pre-processor 140 may include filters which have an effect of equalising the output of the sensors in response to the red, green and blue versions of the test projection.

Accordingly, it is possible to determine the location of the maximum output from the sensor 100 with respect to an vertical offset value, the maximum output being indicative of an image aligned in the vertical direction Y. This offset value is stored and applied to its respective component.

A consequence of changing the adjustment signal whilst the projected image is being displayed contemporaneously with the test projection, is that the projected image will also move. However an aspect of embodiments of the present invention is that, as a consequence of the fact that the alignment process can be performed continuously, only small adjustments are required to move the test projection until it reaches the optimum position over the sensor. To this end the first predetermined position of the test projection may be changed for each performance of the alignment process. This is also because of the narrow field of view of the sensor, which may be photodiode and the narrow width of the test projection in the vertical plane.

Figures 6D to 6F illustrate the second phase of the alignment process to the effect of determining the horizontal adjustment signal (Vx) to align the image component in the horizontal direction. As before, a test signal is generated and combined with the image signal I. The resulting test projection 160 is projected on to the sensors. However, the vertical displacement of the test projection and projected image is set in accordance with the corrected vertical alignment signal value Vy determined in the first phase of the alignment process. This is because in the vertical direction the projected image has already been correctly aligned. Therefore the test projection will lie in a horizontal plane which intersects the sensor. As a result the test projection as shown in figures 6D, 6E and 6F, can be arranged to be much smaller, with dimensions in the order of the dimensions of the sensors area. The test projection 160 preferably has a small dimension in the horizontal X direction. To accommodate any tolerances in the vertical adjustment signal, the test projection may have a larger dimension in the Y direction in order to increase the probability that the test projection intersects the sensor when moved in the horizontal plane. In preferred embodiments the test projection 180 is substantially ovoid, although in other embodiments the test projection may be dot shaped, corresponding to the shape and dimensions of a detection area of the sensor 100.

The test projection 160 is arranged to be projected at a first predetermined position which is preferably to one side of the sensor 100 in the horizontal direction X. Again the first predetermined position may be derived from the vertical correction value corresponding to the factory set vertical adjustment signal, which is stored in memory 40. However, the projected image may have become misaligned horizontally. As such, the first predetermined position for the horizontal alignment is determined from the corrected vertical value (factory setting) and a worst-case condition horizontal offset value which may be applied to the vertical adjustment signal, to ensure that the test projection 160 is projected to the required side of the sensor 100 as illustrated in Figure 6D.

Thereafter, the horizontal offset value is adjusted in accordance with the measurement signal to determine the alignment position of the projected image from a maximum value of the measurement signal. To this end, the test projection is projected closer to the sensor 100, as illustrated in Figure 6E and the output of the sensor 100 is measured again. This adjustment process continues until the test projection 160 has passed over the sensor 100 and the output of the sensor begins to reduce as illustrated in Figure 6F.

Accordingly, the location of the maximum output from the sensor 100 is determined with respect to a horizontal offset value, the maximum output being indicative of an image aligned in the horizontal direction X. This horizontal offset value is stored and applied to the respective deflection coil, by the convergence driver 142, via the amplifier 46.

The first and second phases of the alignment process are then applied to determine the offset values for the remaining image components.

However, whilst it is clear that the technique described in general terms above may be used to determine the maximum output of the sensor, the accuracy to which the maximum may be determined can be improved. One such technique is to perform smaller adjustments to the predetermined position of the test projections 170, 180. Another is to average the derived offset values over a predetermined period. Alternatively, a first set of measurements is taken using large adjustments and thereafter further measurements are taken using smaller steps in the region of the initially estimated maximum. Clearly, however, any combination of techniques may be adopted for a situation and the optimum technique determined based on factors such as what length of time is available to perform the adjustment and the availability processing resources.

### Second Embodiment

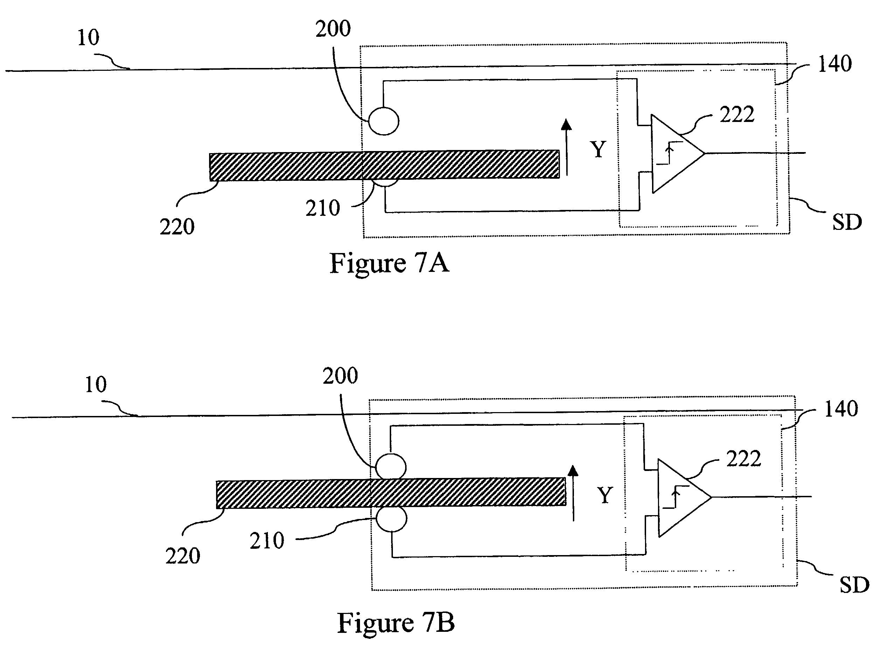

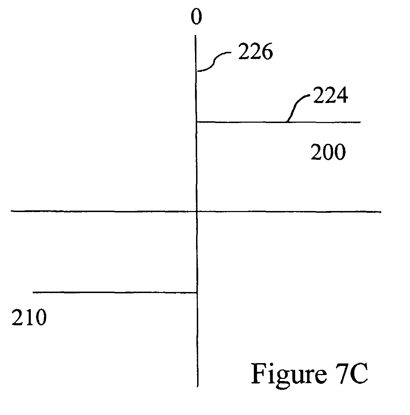

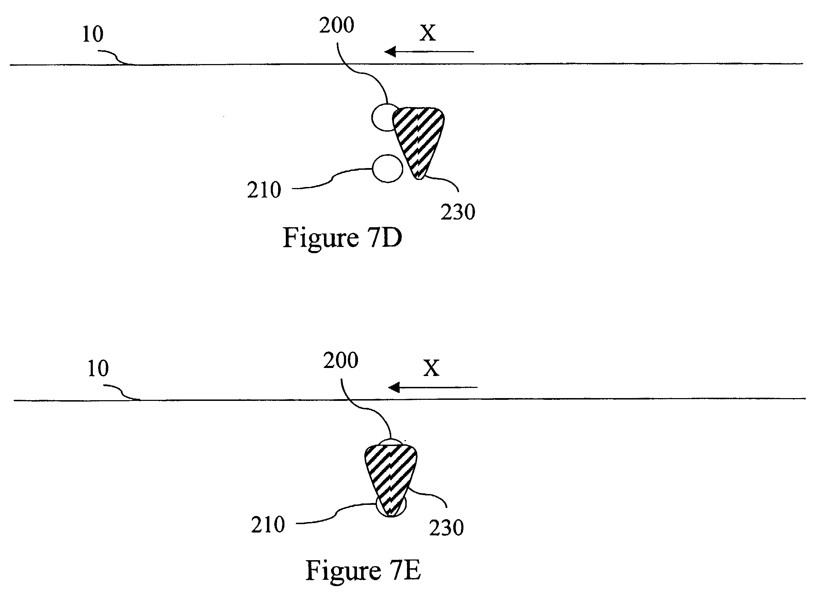

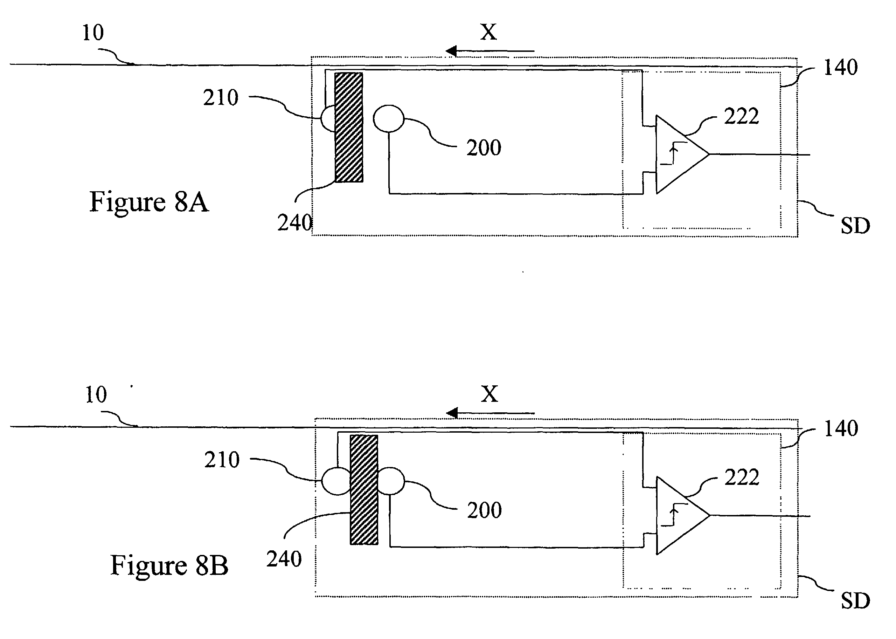

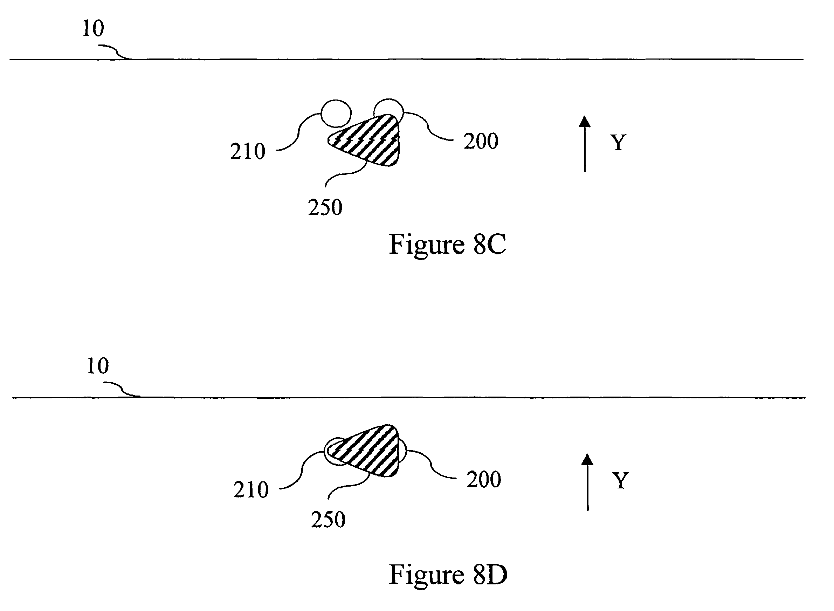

A second embodiment of the present invention will now be explained with reference to Figures 7 and 8. For the second embodiment, the single sensor is replaced by a sensing device SD which comprises two sensors which are arranged to detect the same test projection. An example arrangement of the second embodiment of the present invention is shown in figures 7A to 7D, where parts also appearing in figures 1 to 6 bear the same designated references.

As shown in figure 7A, two sensors 200, 210 are disposed on the display screen 10. The sensors 200, 210 are arranged to be aligned in the vertical direction Y with the vertical distance between the two sensors 200, 210 being a predetermined amount. Preferably, but not exclusively, the sensors 200, 210 are located in proximity to one of the edges of the display screen 10, and in proximity to each other, so that each sensor can receive light from the same test projection. Although in this embodiment the sensors 200, 210 are illustrated as being located at a substantially central point along the edge of the display screen 10, it will be appreciated that the sensors 200, 210 may be positioned at any suitable location. Again the sensors 200, 210 generate a photovoltaic response at each of the wavelengths of the image components and have a narrow field of view. The sensors 200, 210 may therefore be implemented as photodiodes, photo-transistors or the like.

Generally the second embodiment operates in accordance with the alignment process already explained for the first embodiment. Therefore, only those parts of the alignment process which differ from the first embodiment will be explained. However, generally, the alignment process is arranged to detect an optimum alignment position from a null output of the sensing device SD corresponding to a situation in which the two sensors 200, 210 receive the same amount of light from the test projection 220.

As shown in figure 7A, the test projection of the first phase of the alignment process is arranged to have a shape which corresponds with the shape of the test projection provided as an example for the first embodiment. The test signal applied to the video device 144, from the convergence driver 142 therefore represents a test projection 220 which preferably has a smaller dimension in the vertical Y direction than in the horizontal X direction, to improve the likelihood that the test projection 220 will pass over the sensors 200, 210, when detecting the optimum alignment position. The test projection 220 has a large dimension in the horizontal X direction such that the test projection 220 will intersect the sensors 200, 210 even if there are alignment errors present in the horizontal X direction. However, to ensure that each sensor receives some light from the test projection, when in an optimum alignment position, the test projection 220 is preferably arranged to have a size in the vertical Y direction which is larger than the predetermined vertical distance between the two sensors 200, 210.

As with the first embodiment the test projection is projected at a first predetermined position and then at a plurality of other predetermined positions corresponding to offset values applied to the vertical adjustment signal. As before, the first predetermined position may be determined from the corrected vertical adjustment determined by the manual alignment process applied in the factory. However unlike the first embodiment the optimum position is determined not from the peak output from the sensor, but from a null output corresponding to a position of the test projection at which the sensors receive the same amount of light. Preferably however, the first predetermined position is arranged such that at least one of the sensors receives light from the test projection. To this end, the convergence processor determines the predetermined dimension in the X direction of the test projection 230 such that the test projection 230 will illuminate at least one of the sensors 200, 210, based on a worst-case error from the factory correction of the vertical adjustment.

If the test projection is misaligned, as illustrated in Figure 7A, one or other sensors will receive more light and the respective magnitude of the output from the two sensors 200, 210 will differ. Should the respective outputs of the two sensors 200, 210 be equal then this indicates that the test projection is vertically aligned, centred between the two sensors 200, 210, as illustrated in Figure 7B

In this embodiment, the output of the two sensors 200, 210 are received by a comparator 222, which forms part of the pre-processor 140. The comparator 222 subtracts the output of the two sensors 200, 210 to form a measurement signal which is illustrated by a response line 224 plotted graphically in figure 7C. In the situation illustrated in Figure 7A, the output of the comparator 222 has a particular signed value. This is shown as a negative value in figure 7C. The measurement signal from the comparator therefore provides an indication of whether the test projection is one side of the optimum alignment position or the other side. Thus, in the present example, the sign of the value indicates, for the situation illustrated in figure 7A, that the test projection 220 should be repositioned closer to the sensor 200 by adjusting the offset value. Had the output of the comparator had the opposite sign then this would indicate that the test projection 220 should be repositioned closer to the sensor 210. The sign of the measurement signal therefore provides an indication of the relative position of the test projection with respect to the sensors. The magnitude of the offset value applied can be determined in proportion to the magnitude of the measurement signal.

As before, once the vertical offset of the adjustment value (Vy) has been established in the first phase, the horizontal offset adjustment (Vx) is determined following a corresponding displacement of the test projection form a predetermined starting position. Figures 7D and 7E illustrate corresponding steps of the second phase of the alignment process for the horizontal adjustment. However the test projection used to find the horizontal adjustment is differently shaped. The second test projection is shaped and configured to provide a null measurement signal, at the output of the comparator, when light from the test projection is received equally by the two sensors. As shown in figures 7D and 7E, the test projection in preferred embodiments is substantially ovoid, and dimensioned such that the dimension in the Y direction is larger than the distance between the two sensors 200, 210, to ensure that the sensors receive light from the test projection. As before the offset determined for the horizontal alignment is applied to increase the likelihood that the test projection will be projected onto the two sensors.

As for the vertical offset adjustment in the first phase, if the test projection 230 is misaligned, one or other sensors receives more light and the respective magnitude of the output from the two sensors 200, 210 will differ, for example, as illustrated in Figure 7D. Should the respective outputs of the two sensors 200, 210 be equal then this indicates that the test projection is horizontally aligned, centred between the two sensors 200, 210, as illustrated in Figure 7D, which corresponds to the zero point 226 of figure 7C.

In this embodiment, the output of the two sensors 200, 210 are received by the comparator 222, in the pre-processor 140. The comparator 222 subtracts the output of the two sensors 200, 210. In the situation illustrated in Figure 7D, the measurement signal produced from the comparator will have a particular signed value. The sign of the value will indicate, in this illustration, that the test projection 230 should be repositioned by applying an offset value to cause the test projection 230 to move in the direction opposite to the direction X. Had the output of the comparator had the opposite sign then this would indicate that the test projection 220 should be repositioned in the X direction. The magnitude of the output of the comparator is also used to determine the magnitude of offset value to be applied. As soon as the null value 226 from the comparator 222 is detected the offset adjustment value is considered as the value to apply to align the image component.

Accordingly, it is possible to determine the location of the null value with respect to a vertical offset value and a horizontal offset value. The vertical offset value and horizontal offset value are stored and applied to the vertical and horizontal deflection coils to align the image component. The process steps of the alignment process are repeated to determine the offset adjustment values for the remaining image components.

As will be understood, other arrangements can be used to detect the alignment of the test projection using two sensors. In another embodiment, the comparator may be an adder and the output from each of the sensors may be added to produce a composite measurement signal. The composite output signal will not however provide an indication of the relative position of the test projection with respect to the sensor. The output from the adder may be received by a further comparator, which compares the composite measurement signal with a predetermined threshold. This threshold may be derived given a desired degree of accuracy for alignment. Alternatively, the null value of the comparator may be set to zero. This allows for more accurate alignment of the offset values. In another embodiment, the pre-processor 140 may include filters to filter the outputs of the two sensors 200, 210. The filters may be calibrated such that the two sensors 200, 210 output a substantially equal value when the test projections 220, 230 are aligned in the horizontal and vertical direction respectively.

In other embodiments of the invention the two sensors of the sensing device SD described above for the second embodiment of the invention are not aligned vertically, but instead aligned horizontally as shown in Figures 8A to 8D, although otherwise the alignment process corresponds and so will not be repeated. However, the test projections 240, 250 whilst having the same overall shape, are arranged to be substantially rotated by 90 degrees with respect to the version of the test projections appearing in figures 7A, 7B, 7D and 7E.

### Third Embodiment

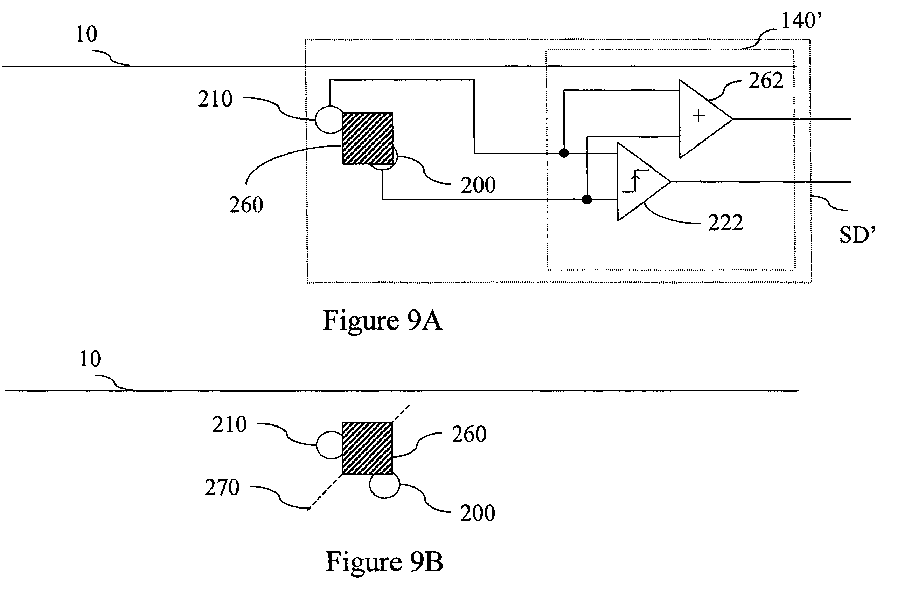

A third embodiment of the invention is illustrated in Figures 9A to 9E. This embodiment has a sensing device SD' having two sensors 200, 210 disposed on the display screen 10. The sensors 200, 210 are arranged to be centred on diametrically opposite corners of a notional quadrangle having a predetermined vertical and horizontal dimension. The sides of the notional quadrangle are arranged to be substantially parallel to the respective edges of the display screen 10. Preferably, but not exclusively, the sensors 200, 210 are located in proximity to one of the edges of the display screen 10. However, each sensor 200, 210 may be located in proximity to a different edge of the display screen 10. Although in this embodiment the sensors 200, 210 are illustrated as being located at a substantially central point along the edge of the display screen 10, it will be appreciated that the sensors 200, 210 may be positioned at any suitable location.

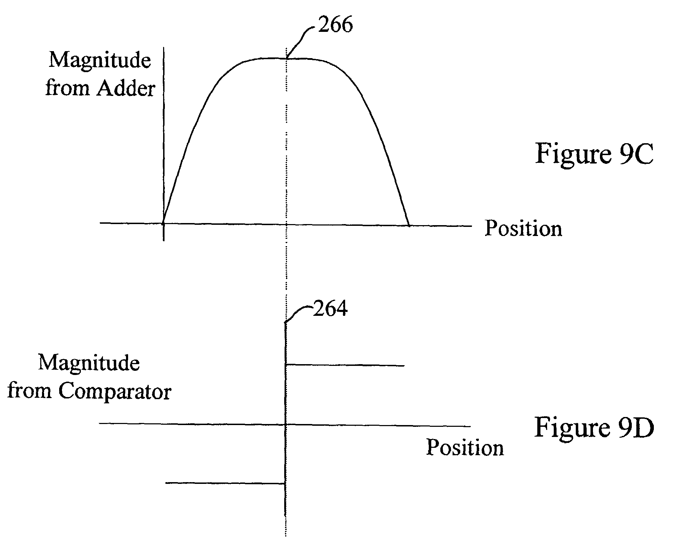

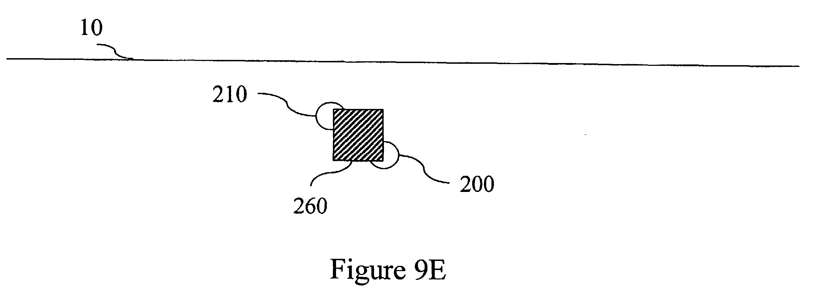

The alignment process according to the third embodiment of the invention corresponds substantially to the alignment process described for the first and second embodiments, and so only the differences from the first and second embodiments will be explained. As with the second embodiment, the third embodiment of the invention is arranged to detect an optimum alignment position when the two sensors of the sensing device SD' receive the same amount of light from the test projection. The alignment process according to the third embodiment is shown in figures 9A, 9B, 9C, 9D and 9E.

For the third embodiment, the test signal represents a test projection 260, which preferably has a vertical dimension Y which is larger than the predetermined vertical distance between the two sensors 200, 210 such that the test projection 260 will intersect at least one of the sensors 200, 210 even though there may be alignment errors in the vertical Y direction. The test projection 260 preferably has a dimension in the horizontal direction X which is larger than the predetermined horizontal distance between the two sensors 200, 210 such that the test projection 260 will intersect at least one of the sensors 200, 210 even though there may be alignment errors in the horizontal X direction.

In contrast to the second embodiment, the offset values of both the vertical and horizontal adjustment values are adjusted to detect for the optimum position of the test projection, rather than determining the offset values separately. As before the test projection starts at a first predetermined position, in which at least one of the sensors receives light from the test projection. When the test projection 260 is misaligned, one or other sensors receive more light and the respective magnitude of the output from the two sensors 200, 210 will differ, as illustrated in Figure 9A. Should the respective outputs of the two sensors 200, 210 be equal then this indicates that the test projection is aligned, centred on the notional line 270 which bisects a line which joins the centres of the two sensors 200, 210, as illustrated in Figure 9B. Thereafter, both the horizontal and vertical offset values may be adjusted by an amount and magnitude determined from the output signals from the sensors to determine offset values where the maximum magnitude occurs.

In this embodiment, the output of the two sensors 200, 210 are received by the comparator 222' within the pre-processors 140'. The comparator firstly subtracts the output of one sensor from the other to determine whether the image is horizontally and vertically aligned, which will occur when the output of the comparator is zero. In the situation illustrated in Figure 9A, the output of the comparator will have a particular signed value. The sign of the value will indicate, in this illustration, that the test projection 260 should be repositioned closer to the sensor 210 by applying a horizontal offset value. Had the output of the comparator had the opposite sign then this would indicate that the test projection 260 should be repositioned closer to the sensor 200. The magnitude of the output of the comparator is used to determine proportionately the magnitude of the offset value to apply. The pre-processor 140' also includes an adder which adds the output of the two sensors 200, 210 to form a composite output signal. This is illustrate in figure 9C, with the output from the comparator 222' illustrated in figure 9D. The measurement signal is formed from the output of the comparator 222' and the adder 262. The optimum position is determined from the position of the test projection at which the comparator is substantially at zero 264 and the output from the adder is at a peak 266.

The horizontal and vertical offset values are both adjusted such that the test projection 260 is moved along the line 260 and the output of the sensors 200, 210 measured again. This adjustment process continues until the test projection 260 has passed over the aligned position, as shown in Figure 9C, and the output of the sensors begins to reduce.

Accordingly, the location of the maximum output from the sensors 200, 210, is determined with respect to a vertical and horizontal offset value, the maximum output being indicative of an image aligned in the vertical direction Y and the horizontal direction X. These offset values are stored to be later applied to its respective component.

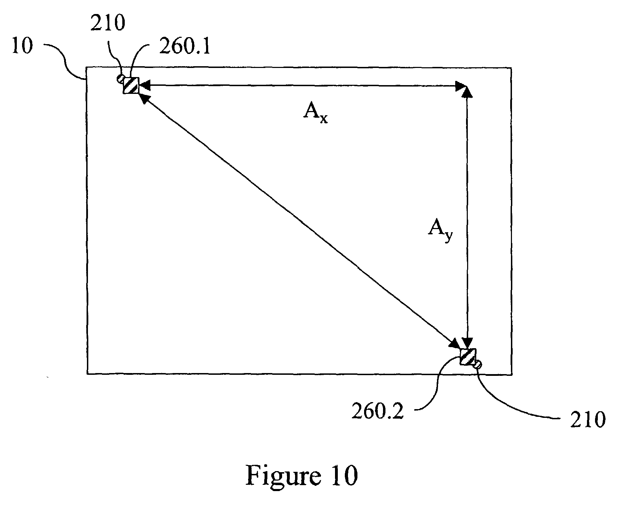

An alternative arrangement according to the third embodiment of the invention is shown in figure 10, where parts also appearing in figures 5 and 9 have the same designated references. In figure 10, the display screen 10, is shown with the two sensors forming the sensing device SD' separated at opposite edges of the screen 10. The test projection in the alternative arrangement is separated into first and second test projections 260.1, 260.2. In the alternative arrangement of the third embodiment, the alignment process operates in the same way, however the two sensors are separated and illuminated by the two separate test projections 260.1, 260.2. The two test projections 260.1, 260.2 are displaced with respect to each other in the vertical and horizontal directions by known amounts Ax, Ay. Hence functionally the alignment process is performed in the same way.

Although particular embodiments of the invention has been described herewith, it will be apparent that the invention is not limited thereto, and that many modifications and additions may be made within the scope of the invention. For example, various combinations of the features of the following dependent claims could be made with the features of the independent claims without departing from the scope of the present invention.

## Claims

1. A projection apparatus for generating an image, by projecting light representative of said image on to a display screen, said apparatus comprising
- at least one projector operable to receive at least one component signal, representative of a component of said image and to project light representative of the component on to said display screen, said projector having an adjustment means for adjusting the relative position of the projected image component on the display screen,
- a convergence processor coupled to said adjustment means and operable to adjust a relative position of said image component on said display screen in response to a measurement signal generated by a sensor in response to light received from said projector, wherein
- said convergence processor is operable in combination with said projector
- to project a test projection on to said screen, said sensor generating said measurement signal in response to said test projection,
- to position said test projection, in a first phase, in a first plurality of predetermined positions substantially aligned in a first direction on said screen,
- to determine a first displacement measure in said first direction from the response of said sensor to said test projection at said first predetermined displacements,
- to position said test projection in a second phase in a second plurality of predetermined positions substantially aligned in a second direction on said screen, and
- to determine a second displacement measure in said second direction from the response of said sensor to said test projection at said second predetermined displacements, the position of said image on said screen being adjusted in accordance with said first and second displacement measures.

2. A projection apparatus as claimed in Claim 1, wherein said test projection comprises has a first shape in said first phase, and a second shape in second phase.

3. A projection apparatus as claimed in Claim 2, wherein said first shape-has a greater size in a direction perpendicular to said first predetermined direction than in a direction substantially co-linear with said first predetermined direction.

4. A projection apparatus as claimed in Claims 1, 2 or 3, wherein said first and second predetermined directions are perpendicular to each other.

5. A projection apparatus as claimed in any preceding Claim, wherein said second plurality of predetermined positions aligned in the second direction is arranged to be at a displacement corresponding to the first displacement measure in the first predetermined direction.

6. A projection apparatus as claimed in Claims 3, 4 or 5, wherein said second shape is substantially the same as the shape of the sensor.

7. A projection as apparatus as claimed in Claim 6, wherein said second shape of the test projection in the second phase is a circle, dot or the like.

8. A projection apparatus as claimed in any of Claims 4 to 7, wherein one of said first and second predetermined directions is a horizontal direction of a viewed image on said screen, and the other of said first and second predetermined directions is a vertical direction of said viewed image on said screen.

9. A projection apparatus as claimed in any preceding Claim, wherein said sensor is a photo diode, photo transistor or the like.

10. A projection apparatus as claimed in any preceding Claim, comprising
- a second sensor disposed on said screen with respect to the first of said sensors, and
- a comparator operatively coupled to said first and second sensors, wherein said first and second sensors are aligned in one of said predetermined directions.

11. A television apparatus having a receiver for detecting a television signal and for recovering from said television signal an image signal representative of an image, and a projection apparatus as claimed in any preceding Claim for generating said image from said image signal.

12. A convergence processor for use in a projection apparatus as claimed in any preceding Claim, said convergence processor being operable
- to generate an adjustment signal for an adjustment means of each of a plurality of projectors, for changing the relative position of an image component projected by each projector, in accordance with a measurement signal received by the convergence processor from a sensor in response to a test projection produced by the projectors with the image components,
- to position said test projection, in a first phase, in a first plurality of predetermined positions substantially aligned in a first direction on said screen,
- to determine a first displacement measure in said first direction from the response of said sensor to said test projection at said first predetermined displacements,
- to position said test projection in a second phase in a second plurality of predetermined positions substantially aligned in a second direction on said screen,
- to determine a second displacement measure in said second direction from the response of said sensor to said test projection at said second predetermined displacements, and
- to adjust the position of said image on said screen in accordance with said first and second displacement measures.

13. An integrated circuit operable as a convergence processor as claimed in Claim 12.

14. A method of generating an image having at least one image component, by projecting light representative of said image on to a display screen, said method comprising the steps of
- projecting test projection on the screen,
- sensing a relative position of the test projection,
- positioning said test projection, in a first phase, in a first plurality of predetermined positions substantially aligned in a first direction on said screen,
- determining a first displacement measure in said first direction from the response of said sensor to said test projection at said first predetermined displacements,
- positioning said test projection in a second phase in a second plurality of predetermined positions substantially aligned in a second direction on said screen,
- determining a second displacement measure in said second direction from the response of said sensor to said test projection at said second predetermined displacements, and
- adjusting the position of said image on said screen in accordance with said first and second displacement measures.

15. A method of generating an image as claimed in Claim 14, wherein said test projection comprises has a first shape in said first phase, and a second shape in second phase.
